# EUROPÄISCHE PATENTSCHRIFT

(11) **EP 1 529 410 B1**
(45) Veröffentlichungstag und Bekanntmachung des Hinweises auf die Patenterteilung: **14.12.2011**
(21) Anmeldenummer: 02807698.2
(22) Anmeldetag: 14.08.2002
(51) Int. Cl.: H04W 8/08, H04W 8/16

(54) **BEHANDLUNG EINER ANFRAGE (LOCATION REQUEST) EINER ERSTEN ORTSANFRAGEBEHANDLUNGSEINRICHTUNG (GATEWAY MOBILE LOCATION CENTER) IM HEIMATREGISTER (HLR) ZUR WEITERLEITUNG AN EINE ZWEITE ORTSANFRAGEBEHANDLUNGSEINRICHTUNG**
TREATMENT OF A LOCATION REQUEST BY A FIRST LOCATION REQUEST TREATMENT DEVICE ( A GATEWAY MOBILE LOCATION CENTRE) IN A HOME REGISTER (HLR) FOR RETRANSMISSION TO A SECOND LOCATION REQUEST TREATMENT DEVICE
TRAITEMENT D'UNE DEMANDE (LOCATION REQUEST) D'UN PREMIER SYSTEME DE TRAITEMENT DE DEMANDE DE LOCALISATION (GATEWAY MOBILE LOCATION CENTER) DANS UN REGISTRE DE RATTACHEMENT (HLR) AFIN DE LA TRANSMETTRE A UN SECOND SYSTEME DE TRAITEMENT DE DEMANDE DE LOCALISATION

(43) Veröffentlichungstag der Anmeldung: 11.05.2005
(73) Patentinhaber: Nokia Siemens Networks GmbH & Co. KG, 81541 München (DE)
(72) Erfinder: MÜLLER, Wilhelm, 85457 Wörth (DE)
(86) Internationale Anmeldenummer: PCT/EP2002/009103
(87) Internationale Veröffentlichungsnummer: WO 2004/021726

(56) Entgegenhaltungen:
- WO-A-02/054812
- US-A- 6 104 931
- US-A- 6 104 932
- US-A- 6 134 447
- US-A1- 2002 086 682

## Beschreibung

Die Erfindung betrifft Verfahren und Vorrichtungen zur Behandlung einer Anfrage (location request) betreffend eine Adresse einer Vermittlungseinrichtung (MSC/SGSN), über welche ein Teilnehmer eines Mobilfunknetzes aktuell erreichbar ist.

US-A-6104932 offenbart ein Mobilfunknetz, in welchem von einem Heimatregister HLR auf eine Anfrage eines GMLC (gateway mobile location center= Ortsabfrage-Einrichtung) dem GMLC eine Adresse des MSC/VLR mitgeteilt wird, in dessen Versorgungsbereich sich eine Mobilstation MS befindet.

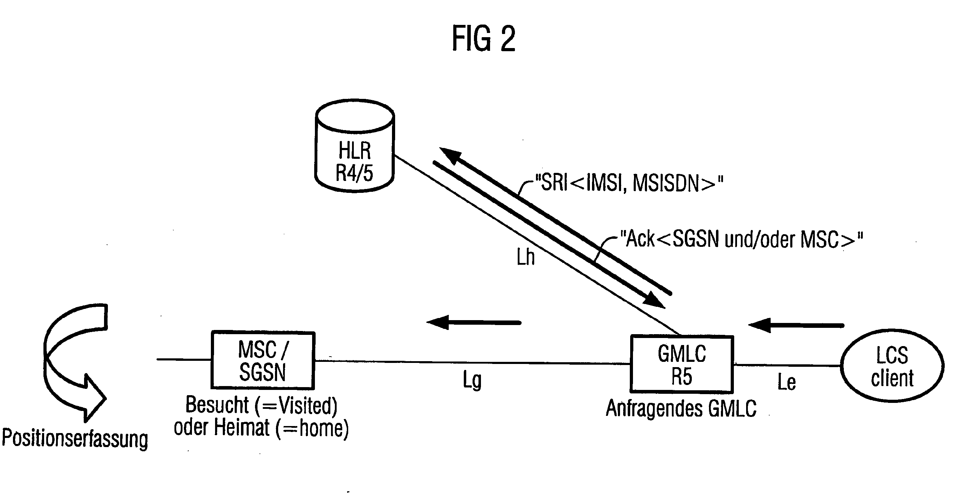

Aus dem unter Http://www.3GPP.org verfügbaren Dokument 3GPP-23.271 ist es bekannt, dass auf eine location-request-Anfrage (Anfrage nach ortsbezogenen Daten wie z.B. dem Ort eines Mobilfunkteilnehmers) eines LCS-client (location services client) bei einem GMLC (gateway mobile location center= Ortsabfrage-Einrichtung) betreffend die Vermittlungseinrichtung MSC/SGSN, über welche ein Teilnehmer eines Mobilfunknetzes aktuell erreichbar ist, das GMLC die Adresse einer für einen Teilnehmer aktuell zuständigen Vermittlungseinrichtung bei einem Heimatregister (HLR) erfragt. Ein GMLC-R5 (GMLC der Version "R5" oder einer noch älteren Version) fragt mit einer SRI-Anfrage (SRI=send routing information = Anforderung Routeninformationen, wie z.B. eine MAP- Zieladresse etc.) bei einer Teilnehmerdatenbank (HLR-R4/R5) des Mobilfunknetzes nach der Adresse einer Vermittlungseinrichtung (MSC, SGSN) oder analog einer Adresse einer dort angeordneten Teilnehmerdatenbank (VLR), über welche ein (durch eine MSISDN oder IMSI etc bezeichneter) Teilnehmer (MS) aktuell erreichbar ist, worauf das Heimatregister (HLR/R4/R5) in einer Antwort (Ack (SGSN)/Ack/MSC)) die (MAP-/ISDN-/ etc.) Adresse einer Vermittlungseinrichtung (MSC/SGSN) repräsentierende Daten an die Ortsabfrageeinrichtung (GMLC-R5) zurücksendet, welche darauf den location request betreffende Daten über eine Lg-Schnittstelle an die ihr (GMLC-R5) vom HLR angegebene Vermittlungseinrichtung (MSC/SGSN) zur dortigen Weiterbehandlung (Positionsfeststellung der aktuellen MS-Position und/oder andere Dienste) sendet. (Fig. 2).

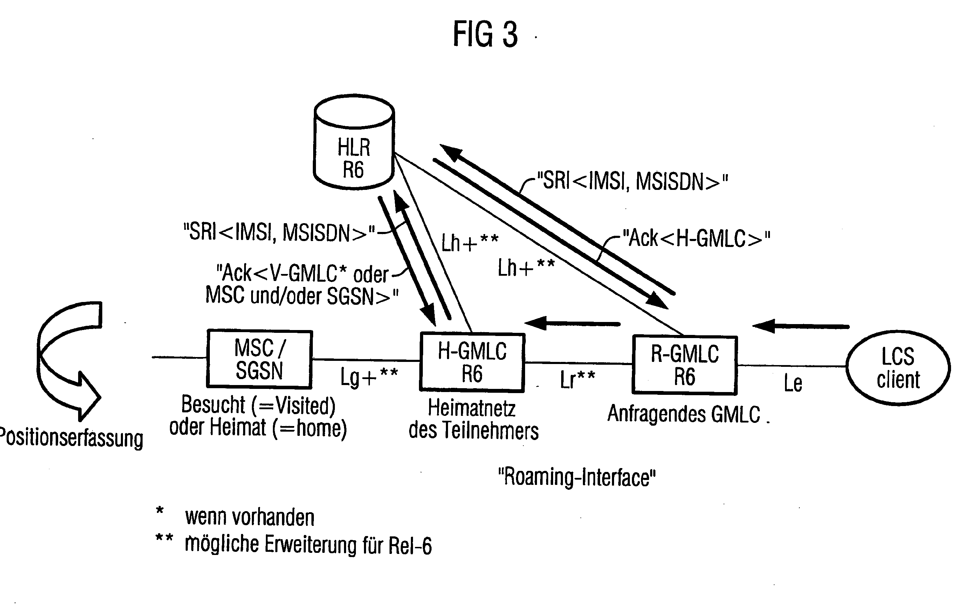

Durch Entwicklung eines Heimat-GMLC wäre es möglich (Fig. 3), auf eine Anfrage eines ersteren GMLC (R-GMLC) bei einer Heimatdatenbank die Adressdaten einer Vermittlungseinrichtung (MSC/SGSN) oder eines H-GMLC im Heimatnetz eines Teilnehmers zu übermitteln, wobei im H-GMLC dort gespeicherte privacy-Daten betreffend privacy-Funktionen etc. überprüft und berücksichtigt werden können. Vom H-GMLC werden (soweit dies aufgrund der Privacy-Daten des Teilnehmers sinnvoll ist) diese z.B. an eine Vermittlungseinrichtung (MSC/SGSN) im vom Teilnehmer besuchten Netz oder einem Heimatnetz zur Weiterbehandlung übermittelt. Bei dieser Variante träte jedoch das Problem auf, dass ein HLR und GMLC einer älteren Version (z.B. GMLC-R5) eine gemäß Fig. 3 übermittelte Angabe des den location request weiterbehandelnden weiteren GMLC (H-GMLC R6) nicht bearbeiten könnten.

Aufgabe der vorliegenden Erfindung ist es, möglich effizient die Behandlung eines location requests mit Heimatregistern (z.B. HLR R6) einer neueren Version auch mit einem GMLC (GMLC-R5) einer älteren Version zu ermöglichen. Die Aufgabe wird jeweils durch die Gegenstände der unabhängigen Ansprüche gelöst.

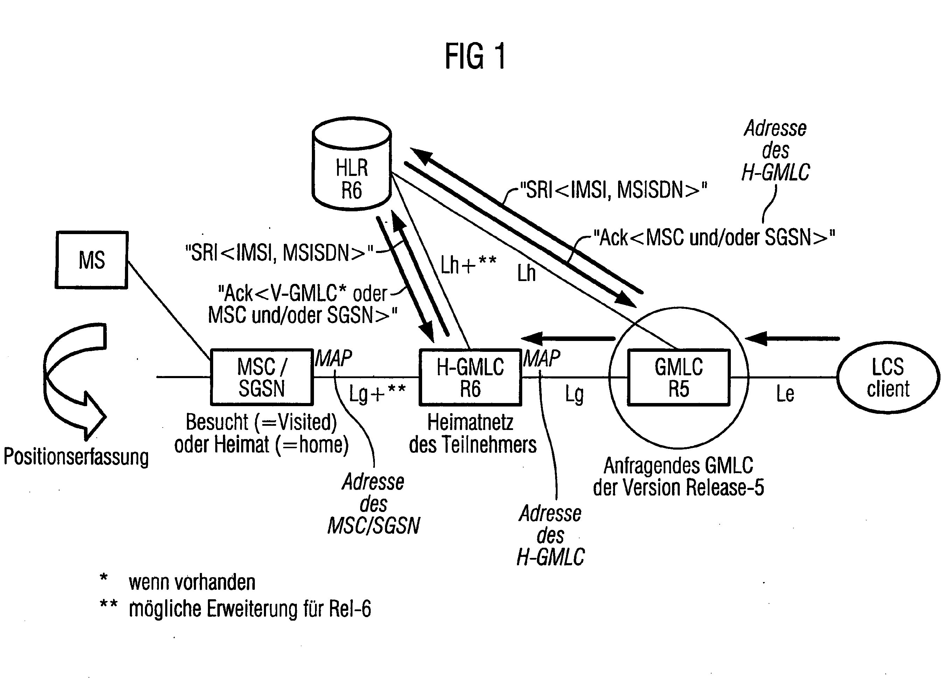

Indem erfindungsgemäß beim Eintreffen einer Anfrage einer Ortsanfragebehandlungseinrichtung(GMLC-R5) einer älteren Version (Release-5) in einem Heimatregister einer neueren Version (HLR-R6) der Ortsanfragebehandlungseinrichtung (GMLC-R5) eine Antwort (Ack(MSC und/oder SGSN)) in einer Form übermittelt wird, welche das GMLC-R5 so versteht, dass ihm die Adressdaten einer Vermittlungseinrichtung (MSC/SGSN) angegeben werden, welche es (GMLC-R5) gemäß Fig. 2 zur weiteren Behandlung eines location requests kontaktieren soll, kontaktiert das GMLC R5 in herkömmlicher Weise das unter der in der Antwort des HLR angegebenen Adresse erreichbare Element, welches hier jedoch nicht (wie bisher üblich) das MSC/SGSN ist, sondern gemäß Fig. 1 eine Ortsanfragebehandlungseinrichtung neuerer Version (H-GMLC R6), welche nach Eintreffen weiterer Daten (Ack..... und ggf. privacy-Daten) vom HLR R6) eine Vermittlungseinrichtung (MSC/SGSN/V-GMLC) in Fig. 1 kontaktiert und dort die weitere Behandlung des location requests (Ortsanfrage) veranlasst. Die Heimatdatenbank (HLR-R6) in Fig. 1 sendet also im Format einer Nachricht, welche standardgemäß einer Ortsanfragebehandlungseinrichtung (GMLC-R5) älterer Version die Vermittlungseinrichtungsadressdaten eines MSC/SCSN angibt (Ack (SGSN und/oder MSC), (gemäß Fig. 2) in dem Adressfeld der Nachricht Ack (.....) die Adresse des H-GMLC-R6 was die Ortsanfragebehandlungseinrichtung (GMLC R5) zur Kontaktierung der angegebenen weiteren Ortsanfragebehandlungseinrichtung (H-GMLC R6) veranlasst. Dabei ist für die erstere Ortsanfragebehandlungseinrichtung (GMLC R5) nicht ersichtlich, dass sie tatsächlich statt (gemäß Fig. 2) einer Vermittlungseinrichtung MSC/SGSN eine weitere Ortsanfragebehandlungseinrichtung H-GMLC-R6 gemäß Fig. 1 kontaktiert, welche (ggf. nach Berücksichtigung von Privacy-Profil-Daten des HLR R6) wiederum unter der Vermittlungseinrichtungsadresse, welche das H-GMLC R6 in der Nachricht Ack(V-GMLC oder MSC oder SGSN) vom HLR R6 erhält, die Vermittlungseinrichtung MSC/SGSN kontaktiert.

Besonders vorteilhafte Ausgestaltung ergeben sich aus den Unteransprüchen.
So ist es z.B. vorteilhaft, wenn bei der Behandlung eines location request in einem Heimat-GMLC (H-GMLC R6) gespeicherte Profildaten betreffend den Teilnehmer bezüglich welchem ein location request ausgeführt werden soll, berücksichtigt werden können; dies können insbesondere Privacy (Privatheit)-Profildaten sein, welche bezüglich eines Endgerätes oder Teilnehmers oder einer Teilnehmeridentitätskarte gespeichert sind und angeben ob und unter welchen Bedingungen eine Positionserfassung bezüglich des Teilnehmers bearbeitet und/oder beantwortet werden darf.

Weitere Merkmale und Vorteile der Erfindung ergeben sich aus der nachfolgenden Beschreibung des Standes der Technik und eines Ausführungsbeispieles anhand der Zeichnungen.

Dabei zeigt:
- Fig. 1: schematisch das erfindungsgemäße Zusammenwirken von Komponenten eines Mobilfunknetzes zur Behandlung eines location requests mit Elementen älterer und neuerer Versionen,
- Fig. 2: gemäß Stand der Technik die Behandlung eines location requests mit einem GMLC-R5 älterer Version,
- Fig. 3: die Behandlung eines location requests mit einem HLR-R6 und R-GMLC R6 neuerer Version.

Die bereits eingangs beschriebene Behandlung eines location requests (Anfrage bezüglich des Ortes eines Teilnehmers) gemäß Fig. 2 ist für derzeit übliche Versionen (Produktversionen) von Ortsanfragebehandlungseinrichtungen GMLC und Teilnehmerdatenbanken (HLR-R5) geeignet. Wie eingangs ferner beschrieben wäre auch eine mögliche Bearbeitung eines location requests gemäß Fig. 3 problematisch, wenn statt des in Fig. 3 gezeigten R-GMLC-R6 ein GMLC-R5 vorliegt, da dieses eine in Fig. 3 angedeutete Angabe "Ack(H-GMLC)" einer weiteren Ortsanfragebehandlungseinrichtung H-GMLC-R6 nicht interpretieren und bearbeiten kann.

Deshalb wird gemäß Fig. 1 von einem Heimatregister HLR R6 neuer Version bei dortigem Eintreffen einer Anfrage einer ersteren Ortsanfragebehandlungseinrichtung GMLC-R5 einer (älteren) Version, welche als Antwort von der Teilnehmerdatenbank (HLR) auf die Anfrage die Angabe (Ack-H-GMLC) von Adressdaten betreffend eine Adresse einer Vermittlungseinrichtung (MSC/SGSN etc.) erwartet, der ersteren Ortsanfragebehandlungseinrichtung GMLC-R5 älterer Version die Adresse einer weiteren Ortsanfragebehandlungseinrichtung (H-GMLC-R6) in einem Datenfeld angegeben, in welchem sonst die Adresse der Vermittlungseinrichtung angeben würde. Dabei wird ein Format in der Angabe der Ortsanfragebehandlungseinrichtungs-Aäresse der weiteren Ortsanfragebehandlungseinrichtung H-GMLC verwendet, in welchem die erste Ortsanfragebehandlungseinrichtung GMLC-R5 die Angabe (Ack-H-GMLC) einer Adresse einer Vermittlungseinrichtung (MSC/SGSN etc.) erwartet.

Das GMLC-R5 interpretiert die in diesem (für eine GLMC-Adresse vorgesehenen) Adressfeld angebende Adresse der Vermittlungseinrichtung (MSC und/oder SGSN) dahingehend, dass es (GMLC-R5) die mit durch diese Adresse angegebene Vermittlungseinrichtung zur weiteren Behandlung des location requests kontaktieren soll. Dabei kontaktiert sie jedoch gemäß Figur 1 die weitere Ortsanfragebehandlungseinrichtung H-GMLC-R6, welche (in für sie herkömmlich vorgesehener Weise) gemäß Fig. 2 anhand der ihr derart übermittelten Daten und der ihr vom HLR-R6 übermittelten Daten den location request weiter behandelt, indem sie ggf. über eine Lg+**-Schnittstelle in Fig. 1 die ihr angegebene Vermittlungseinrichtung MSC/SGSN kontaktiert.

Damit können erfindungsgemäß Ortsanfragebehandlungseinrichtungen GMLC-R5 älterer Version mit Heimat-Teilnehmerdatenbanken HLR-R6 neuere Version und weiteren Ortsanfragebehandlungseinrichtungen (H-GMLC-R6 neuer Version) effizient betrieben werden. Es ist dabei möglich, ggf. in einer Ortsanfragebehandlungseinrichtung (H-GMLC-R6) neuer Version gespeicherte, sich auf den Teilnehmer beziehende Profildaten, insbesondere Privacy-Profildaten, zu berücksichtigen. Insbesondere können derartige Privacy-Profildaten angeben, ob für einen Teilnehmer grundsätzlich oder in Abhängigkeit von seinem Ort oder in Abhängigkeit vom Anrufer oder in Abhängigkeit von sonstigen Bedingungen oder in anderer Weise location requests behandelt und/oder beantwortet werden dürfen; dieses somit auch in Zusammenarbeit mit GMLC-R5 älterer Version möglich.

Beispielsweise kann dieser Prozess auf eine Anfrage eines Teilnehmers eines zellularen Mobilfunknetzes ablaufen, dem die Position eines weiteren Teilnehmers eines zellularen Mobilfunknetzes repräsentierende (gegebenenfalls nur soweit die Profildaten des weiteren Teilnehmers es zulassen) Daten übermittelt werden. Die Anfrage läuft dann z.B. vom anfragenden Teilnehmer insbesondere über eine Luftschnittstelle und Vermittlungseinrichtungen zum in Fig.1 gezeigten LCS client und ab dort gemäß Fig. 1, worauf dem anfragenden Teilnehmer die Position eines weiteren Teilnehmers eines zellularen Mobilfunknetzes repräsentierende Daten (z.B. per SMS, MMS, Karte, etc) übermittelt werden können.

Die Vermittlungseinrichtung (MSC/SGSN/V-GMLC), über welche (MSC/SGSN/V-GMLC) ein Teilnehmer (MS) aktuell erreichbar ist kann eine Vermittlungseinrichtung wie eine MSC/SGSN sein über welche der Teilnehmer gerade telekommuniziert oder in deren Besuchsregister (VLR) Daten des Teilnehmers gespeichert sind oder eine sonstige Einrichtung (V-GMLC) über welche ein Teilnehmer direkt oder über andere Einrichtungen erreicht werden kann.

Für das Format von Adressdaten gibt es viele Möglichkeiten, insbeondere das MAP Format (Eine MAP-Adresse ist z.B. eine Netzwerkknotennummer im ISDN Format für MSC, SGSN, GMLC). Auch für ein Interworking Scenario ist ein MAP-Adressformat am Lg und Lh interface (und eventuell auch an Lg+ und an Lh+ in Rel-6) geeignet. Ein IP-Adressformat für Adressdaten ist z.B. auf dem Lr-Interface möglich.

## Patentansprüche

1. Verfahren zur Behandlung einer Ortdatenanfrage oder location request betreffend einen Teilnehmer eines Mobilfunknetzes,
wobei nach einem Eintreffen einer Anfrage (SRI) einer ersten Ortsanfragebehandlungseinrichtung (GMLC-R5) bei einer Teilnehmerdatenbank (HLR R6) eines Mobilfunknetzes nach Vermittlungseinrichtungs-Adressdaten, MAP (MSC/SGSN), einer Vermittlungseinrichtung (MSC/SGSN), über welche (MSC/SGSN) der Teilnehmer (MS) aktuell erreichbar ist,
die Teilnehmerdatenbank (HLR R6) der ersten Ortsanfragebehandlungseinrichtung (GMLC-R5) anstatt Vermittlungseinrichtungs-Adressdaten, MAP(MSC/SGSN), in einer Antwort (Ack (MSC SGSN)) die Adresse einer weiteren Ortsanfragebehandlungseinrichtung (H-GMLC-R6) repräsentierende Ortsanfragebehandlungseinrichtungs-Adressdaten, MAP(H-GMLC), angibt, falls es sich um eine Anfrage (SRI) einer Ortsanfragebehandlungseinrichtung (GMLC-R5) einer Version, beispielsweise Release 5, handelt, gemäß welcher Version vorgesehen ist, dass die Ortsanfragebehandlungseinrichtung (GMLC-R5) von der Teilnehmerdatenbank (HLR R6) VermittlungseinrichtungsAdressdaten, MAP (MSC/SGSN), als Antwort bekommt.

2. Verfahren nach Anspruch 1, **dadurch gekennzeichnet, dass** die weitere Ortsanfragebehandlungseinrichtung (H-GMLC-R6) eine Ortsanfragebehandlungseinrichtung im Heimatnetz des Teilnehmers (MS) ist.

3. Verfahren nach einem der vorhergehenden Ansprüche, **dadurch gekennzeichnet, dass** die weitere Ortsanfragebehandlungseinrichtung (H-GMLC-R6) Profildaten des Teilnehmers (MS) speichert, insbesondere "Privacy-Profildaten", welche angeben ob und unter welchen Bedingungen ein "location request" bezüglich des Teilnehmers (MS) bearbeitet und/oder beantwortet werden soll.

4. Verfahren nach einem der vorhergehenden Ansprüche, **dadurch gekennzeichnet, dass** die erste Ortsanfragebehandlungseinrichtung (GMLC-R5) einer älteren Version die Anfrage (SRI) der ersten Ortsanfragebehandlungseinrichtung (GMLC-R5) an die Teilnehmerdatenbank (HLR R6) nach Eingang einer Anfrage eines LCS-Client (LCS client) bei ihr (GMLC-R5) absendet.

5. Verfahren nach einem der vorhergehenden Ansprüche, **dadurch gekennzeichnet, dass** die erste Ortsanfragebehandlungseinrichtung (GMLC-R5) eine location request -Anfrage an die Adresse, MAP(H-GMLC), der genannten weiteren Ortsanfragebehandlungseinrichtung (H-GMLC-R6) sendet, welche (H-GMLC-R6) sie an die Adresse einer Vermittlungseinrichtung (MSC/SGSN) leitet, die ihr (H-GMLC-R6) von der Teilnehmerdatenbank (HLR R6) auf ihre (H-GMLC-R6) Anfrage (SRI) bei der Teilnehmerdatenbank (HLR R6) hin genannt wurde (Ack).

6. Verfahren nach Anspruch 4, **dadurch gekennzeichnet, dass** die Anfrage (SRI) der ersten Ortsanfragebehandlungseinrichtung (GMLC-R5) eine einen Teilnehmer (MS) identifizierende Angabe, beispielweise IMSI/MSISDN/etc., eines zu lokalisierenden Teilnehmers enthält.

7. Verfahren nach einem der vorhergehenden Ansprüche, **dadurch gekennzeichnet, dass** die Ortsanfragebehandlungseinrichtungs-Adressdeten, MAP (H-HGMLC), das gleiche Format wie Vermittlungeinrichtungs-Adressdaten haben, insbesondere ein ISDN-Format oder MAP-Daten-Format.

8. Verfahren nach einem der vorhergehenden Ansprüche, **dadurch gekennzeichnet, dass** die Version der ersten Ortsanfragebehandlungseinrichtung (GMLC-R5) von der Teilnehmerdatenbank (HLR R6) erkannt wird aufgrund des nicht erweiterten Formates der Anfrage (SRI).

9. Verfahren nach einem der vorhergehenden Ansprüche, **dadurch gekennzeichnet, dass** die Version der ersten Ortsanfragebehandlungseinrichtung (GMLC-R5) aufgrund des benutzten Lh-Interfaces erkannt wird.

10. Verfahren nach einem der vorhergehenden Ansprüche, **dadurch gekennzeichnet, dass** in der weiteren Ortsanfragebehandlungseinrichtung (H-GMLC R6) Profildaten des Teilnehmers, hinsichtlich welchem ein location request ausgeführt werden soll geprüft werden und das die weitere Ortsanfragebehandlungseinrichtung (H-GMLC R6) die ihr genannte Vermittlungseinrichtung (MSC/SGSN) nur kontaktiert, falls aufgrund der Profildaten des Teilnehmers ein ihn betreffender location request auszuführen ist.

11. Vorrichtung **gekennzeichnet durch** Mittel zur Ausführung aller Schritte eines Verfahrens nach einem der vorhergehenden Ansprüche.

## Claims

1. Method for the treatment of a location data request or location request concerning a subscriber to a mobile radio network,
wherein,
after an arrival of a request (SRI) of a first location request treatment device (gateway mobile location centre - GMLC-R5) at a subscriber database (home location register - HLR R6) of a mobile radio network for switching device address data, MAP(MSC/SCSN), of a switching device (MSC/SGSNX), via which (MSC/SGSN) the subscriber (MS) can be currently reached, the subscriber database (HLR R6) of the first location request treatment device (GMLC-R5) specifies, instead of switching device address data, MAP(MSC/SCSN), in a response (acknowledgement Ack (MSC/SGSN)), location request treatment device address data, MAP (H-GMLC), representing the address of a further location request treatment device (H-GMLC-R6), if this is a request (SRI) of a location request treatment device (GMLC-R5) of a version, for example Release 5, according to which version it is provided that the location request treatment device (CMLC-R5) receives from the subscriber database (HLR R6) switching device address data, MAP (MSC/SGSN), as a response.

2. Method according to Claim 1, **characterized in that** the further location request treatment device (H-GMLC-R6) is a location request treatment device in the home network of the subscriber (MS).

3. Method according to one of the preceding claims, **characterized in that** the further location request treatment device (H-GMLC-R6) stores profile data of the subscriber (MS), particularly "privacy profile data", which specify whether and under what conditions a "location request" with respect to the subscriber (MS) should be processed and/or answered.

4. Method according to one of the preceding claims, **characterized in that** the first location request treatment device (GMLC-R5) of an older version sends the request (SRI) of the first location request treatment device (GMLC-R5) to the subscriber database (HLR R6) after receiving a request of an LCS client.

5. Method according to one of the preceding claims, **characterized in that** the first location request treatment device (GMLC-R5) sends a location request to the address, MAP (H-GMLC) of the said further location request treatment device (H-GMLC-R6), which (H-GMLC-R6) conducts it to the address of a switching device (MSC/SGSN) which was mentioned (Ack) to it (H-GMLC-R6) by the subscriber database (HLR R6) following its (H-GMLC-R6) request (SRI) at the subscriber database (HLR R6).

6. Method according to Claim 4, **characterized in that** the request (SRI) of the first location request treatment device (GMLC-R5) contains any information identifying a subscriber (MS), for example IMSI/MSISDN/etc., of a subscriber to be located.

7. Method according to one of the preceding claims, **characterized in that** the location request treatment device address data, MAP(H-HCMLC), have the same format as switching device address data, particularly an ISDN format or MAP data format.

8. Method according to one of the preceding claims, **characterized in that** the version of the first location request treatment device (GMLC-R5) is recognized by the subscriber database (HLR R6) on the basis of the non-expanded format of the request (SRI).

9. Method according to one of the preceding claims, **characterized in that** the version of the first location request treatment device (GMLC-R5) is recognized on the basis of the Lh interface used.

10. Method according to one of the preceding claims, **characterized in that**, in the further location request treatment device (H-GMLC R6), profile data of the subscriber, with regard to which a location request is to be carried out, are checked and that the further location request treatment device (H-GMCL R6) contacts the switching device (MSC/SGSN) mentioned to it only if, due to the profile data of the subscriber, a location request relating to it is to be carried out.

11. Device **characterized by** means for carrying out all steps of a method according to one of the preceding claims.

## Revendications

1. Procédé de traitement d'une demande de données de localisation ou location request concernant un usager d'un réseau de téléphonie mobile,
une base de données d'usagers (HLR R6), après l'arrivée d'une demande (SRI) d'un premier dispositif de traitement de demandes de localisation (GMLC-R5) auprès de la base de données d'usagers (HLR R6) d'un réseau de téléphonie mobile concernant des données d'adresse MAP (MSC/SGSN) d'un dispositif de commutation (MSC/SGSNX) via lesquelles (MSC/SGSN) l'usager (MS) est actuellement joignable, indiquant au premier dispositif de traitement de demandes de localisation (CMLC-R5), dans une réponse (Ack (MSC/SGSN)), au lieu de données d'adresse de dispositif de commutation MAP (MSC/SGSN), des données d'adresse de dispositif de traitement de demandes de localisation MAP (H-GMLC) représentant l'adresse d'un autre dispositif de traitement de demandes de localisation (H-GMLC-R6), s'il s'agit d'une demande (SRI) d'un dispositif de traitement de demandes de localisation (GMLC-R5) d'une version, par exemple Release 5, conformément à laquelle il est prévu que le dispositif de traitement de demandes de localisation (GMLC-R5) reçoit, en tant que réponse, des données d'adresse de dispositif de commutation MAP (MSC/SGSN) de la part de la base de données d'usagers (HLR R6).

2. Procédé selon la revendication 1, **caractérisé en ce que** l'autre dispositif de traitement de demandes de localisation (H-GMLC-R6) est un dispositif de traitement de demandes de localisation dans le réseau de rattachement de l'usager (MS).

3. Procédé selon l'une des revendications précédentes, **caractérisé en ce que** l'autre dispositif de traitement de demandes de localisation (H-GMLC-R6) stocke des données de profil de l'usager (MS), et plus particulièrement des «données de profil de protection de la vie privée», qui indiquent si et dans quelles conditions il faut traiter et/ou répondre à une demande de localisation relative à l'usager (MS).

4. Procédé selon l'une des revendications précédentes, **caractérisé en ce que** le premier dispositif de traitement de demandes de localisation (GMLC-R5) d'une version antérieure envoie la demande (SRI) du premier dispositif de traitement de demandes de localisation (GMLC-R5) à la base de données d'usagers (HLR R6) après l'entrée auprès d'elle (GMLC-R5) d'une demande d'un client LCS (LCS client).

5. Procédé selon l'une des revendications précédentes, **caractérisé en ce que** le premier dispositif de traitement de demandes de localisation (GMLC-R5) envoie une demande de localisation à l'adresse MAP (H-GMLC) dudit autre dispositif de traitement de demandes de localisation (H-GMLC-R6) qui (H-GMLC-R6) l'achemine vers l'adresse d'un dispositif de commutation (MSC/SGSN) qui lui (H-GMLC-R6) a été indiqué (Ack) par la base de données d'usagers (HLR R6) en réponse à sa (H-GMLC-R6) demande (SRI) auprès de la base de données d'usagers (HLR R6).

6. Procédé selon la revendication 4, **caractérisé en ce que** la demande (SRI) du premier dispositif de traitement de demandes de localisation (GMLC-R5) contient une indication identifiant un usager (MS), par exemple IMSI/MSISDN/etc., d'un usager à localiser.

7. Procédé selon l'une des revendications précédentes, **caractérisé en ce que** des données d'adresse de dispositif de traitement de demandes de localisation MAP (H-HGMLC) ont le même format que des données d'adresse de dispositif de commutation, et plus particulièrement un format ISDN ou un format de données MAP.

8. Procédé selon l'une des revendications précédentes, **caractérisé en ce que** la version du premier dispositif de traitement de demandes de localisation (GMLC-R5) est reconnue par la base de données d'usagers (HLR R6) à l'aide du format non élargi de la demande (SRI).

9. Procédé selon l'une des revendications précédentes, **caractérisé en ce que** la version du premier dispositif de traitement de demandes de localisation (GMLC-R5) est reconnue à l'aide de l'interface Lh utilisée.

10. Procédé selon l'une des revendications précédentes, **caractérisé en ce que** sont contrôlées, dans l'autre dispositif de traitement de demandes de localisation (H-GMLC R6), des données de profil de l'usager concernant lequel une demande de localisation doit être exécutée et l'autre dispositif de traitement de demandes de localisation (H-GMLC R6) ne contacte le dispositif de commutation (MSC/SGSN) qui lui a été indiqué que si, étant donné les données de profil de l'usager, une demande de localisation le concernant doit être exécutée.

11. Dispositif, **caractérisé par** des moyens pour exécuter toutes les étapes d'un procédé selon l'une des revendications précédentes.
